# EUROPEAN PATENT SPECIFICATION

(11) **EP 4 147 838 B1**
(45) Date of publication and mention of the grant of the patent: **26.11.2025**
(21) Application number: 21908080.1
(22) Date of filing: 14.09.2021
(51) Int. Cl.: B28C 7/16, H04W 4/021, H04W 4/44, B60Q 9/00, B28C 5/42, B28C 7/04, B28C 7/02

(54) **MIXER TRUCK AND METHOD FOR CONTROLLING SAME, MIXING PLANT AND METHOD FOR CONTROLLING SAME, AND CENTERING CONTROL SYSTEM**
MISCHERWAGEN UND VERFAHREN ZUR STEUERUNG DAVON, MISCHANLAGE UND VERFAHREN ZUR STEUERUNG DAVON SOWIE ZENTRIERSTEUERUNGSSYSTEM
CAMION MALAXEUR ET SON PROCÉDÉ DE COMMANDE, STATION DE MÉLANGE ET SON PROCÉDÉ DE COMMANDE, ET SYSTÈME DE COMMANDE DE CENTRAGE

(30) Priority: 30.07.2021 CN 202110876014
(43) Date of publication of application: 15.03.2023
(73) Proprietor: Sany Special Purpose Vehicle Co., Ltd., Hunan 422000 (CN)
(72) Inventor: HE, Zhiguo, Hunan 422000 (CN); ZHAO, Zhengfei, Hunan 422000 (CN); GONG, Liuqing, Hunan 422000 (CN)
(74) Representative: DREISS Patentanwälte PartG mbB
(86) International application number: PCT/CN2021/118347
(87) International publication number: WO 2023/004955

(56) References cited:
- WO-A1-2021/075438
- CN-A- 102 602 318
- CN-A- 103 072 207
- CN-A- 105 058 590
- CN-A- 108 958 188
- CN-A- 109 516 240
- CN-A- 111 745 821
- CN-A- 111 823 396
- CN-A- 112 784 814
- CN-U- 211 468 300
- CN-U- 213 690 698
- JP-A- 2003 341 413
- US-B1- 10 800 618

## Description

This application claims priority to Chinese Patent Application No. 202110876014.X filed with China National Intellectual Property Administration on July 30, 2021 and entitled "Mixer Truck and Control Method Thereof, Mixing Station and Control Method Thereof, and Centering Control System".

### FIELD

The present invention relates to the field of mixer truck control, in particular, to a mixer truck and a control method thereof, a mixing station and a control method thereof, and a centering control system.

### BACKGROUND

A mixer truck is a special engineering mixer truck for transporting materials such as concrete. When a mixer truck drives into a mixing station for charging, the mixer truck needs to park in a discharging channel in the mixing station and the feed hopper of the mixer truck should be aligned with the discharging opening of the mixing station, while the channel in the mixing station is narrow and there is a large blind area, and this makes parking difficult. Usually, a person working in the station needs to direct the driver or the driver needs to repeatedly get off to check, and then the operation of centering the feed hopper and the discharging opening can be completed, and prompt information cannot be sent when the driver adjusts the position of the mixer truck, and the driver can only rely on his or her own experience or other's prompt to adjust the position of the mixer truck. In addition, in the prior art, centering the discharging opening and the feed hopper requires generally judging the position of the mixer truck by man power, then the parking position of the mixer truck is adjusted based on the driver's own experience, and the result of centering is identified through a machine after the adjustment is completed, that is, the prior art can only judge whether the image of manually aligned discharging opening and feed hopper has been precisely aligned; if alignment is not achieved, the driver needs to adjust the position of the mixer truck by himself or herself, thus the working efficiency during the centering is low, and the method in the prior art can only judge whether the discharging opening and the feed hopper have been centered in a close range; when the mixer truck is far away from the mixing station or the deviation between a reversing position and the discharging opening is relatively large, the centering judging method in the prior art can only judge that centering is not achieved, while cannot provide any prompt to the driver, and thus the driver can only adjust the position of the mixer truck blindly.

Therefore, how to put forward a solution that can help the driver to achieve accurately centering the discharging opening of the mixing station and the feed hopper of the mixer truck has currently been a problem that needs to be solved urgently.

JP2003341413A discloses a control method for a mixer truck in accordance with the preamble of claim 1 and a control method for a mixing station in accordance with the preamble of claim 8, in detail it relates to a concrete mixer car used for a network type automated concrete plant is provided with: a plurality of sensors for detecting a state of the concrete mixer car, and a transmission means for detecting the state of the concrete mixer car in every certain time by the plurality of sensors to transmit a signal corresponding to the detected state to a plant center as information of the state of the concrete mixer car along with the identification number of the concrete mixer car. The concrete mixer cars are deployed in a plurality of ready-mixed concrete plants and efficiently operated.

US10800618B1 relates to a concrete truck or cement tanker truck alignment system with a loading station having a discharge chute, an electronic sensor that sees through dust or an environmental dust shield, and provides location information used to determine a hopper offset. The hopper offset is a measurement of the physical offset between a feed hopper on the truck and the discharge chute. The system may further include an alignment feedback unit that provides feedback based on the hopper offset. The alignment feedback unit may indicate the hopper offset is within an alignment tolerance. The sensor may use radar. The alignment feedback unit may provide auditory or graphical feedback. The graphical feedback may show a discharge icon representing the position of the discharge chute and a hopper icon representing the feed hopper where the location of the hopper icon is relative to the discharge chute based on the hopper offset.

CN108958188A relates to an invention which provides a piece of concrete information transmission and management equipment, system and method in order to solve the problem of dynamic matching and data transmission among the concrete station, the transportation equipment and the material distribution equipment. The concrete information transmission and management system includes a dispatching unit, a concrete station communication unit and confirmation unit, a transportation equipment communication unit and confirmation unit, and a material distribution equipment communication unit and confirmation unit. The concrete station communication unit is used for receiving the dispatching data sent by the dispatching unit and transmitting the dispatching data and the concrete data to the transportation equipment communication unit, wherein the dispatching data includes the number of transportation equipment and the number of distribution equipment. The transportation equipment communication unit transmits the dispatching data and the concrete data to the material distribution equipment communication unit. The concrete station and transportation equipment confirmation units are used for matching concrete stations and transportation equipment. The transportation equipment and distribution equipment confirmation units are used for matching transportation equipment and distribution equipment.

CN111823396A relates to an invention which belongs to the technical field of mixer trucks and relates to a bran-new mixer truck anti-overweight electric control system. The bran-new mixer truck anti-overweight electric control system comprises a mixer truck, a mixer truck tail quality sensor, a mixer truck head quality sensor, a mixing station, a mixing station camera and receiving-sending device, a mixing station material feeding mouth, a network platform, a display screen, a GPS and receiving-sending device, a mixer truck data transmission line and a mixer truck mixing tank. According to the bran-new mixer truck anti-overweight electric control system, by means of the manner that the mixer truck tail quality sensor, the mixer truck head quality sensor and the GPS and receiving-sending device are additionally installed on the mixer truck, the fact that effective data are provided for the network platform is realized; the load capacity and the running speed of the mixer truck are monitored through the display screen of the network platform, mixer truck overload and overspeed intelligent control is realized to meet mixer truck stable operation, and the occurrence probability of car accidents is reduced; and the bran-new mixer truck anti-overweight electric control system is simple in main body, ingenious in design idea, safe and convenient to use, friendly in application effect and broad in market prospect.

CN211468300U relates to a utility model which discloses an automatic prompting device for in-place charging of a concrete mixer truck. The system comprises an isolation pile, a camera, a pressure sensor, a controller, an information display screen and an audio prompting device, the camera is positioned behind the mixer truck; the information display screen is located in front of the left of the mixer truck cab, the audio prompting device is located on the left side of the mixer truck cab, the signal output end of the camera and the signal output end of the pressure sensor are electrically connected with the signal input end of the controller, and the signal output end of the controller is electrically connected with the information display screen and the audio prompting device. The whole charging process of the mixer truck is automatically prompted, a driver can accurately park the mixer truck in place and complete charging according to specific prompting information given by the controller, the working efficiency and safety of charging of the mixer truck are improved, the driver can clearly and accurately receive a prompting instruction sent by the controller, and production accidents are avoided.

### SUMMARY

To solve the above technical problem, according to a first aspect of the present invention, a control method for a mixer truck is provided.

According to a second aspect of the present invention, a control method for a mixing station is further provided.

According to a third aspect of the present invention, a mixer truck is further provided.

According to a fourth aspect of the present invention, a mixing station is further provided.

According to a fifth aspect of the present invention, a centering control system is further provided.

In view of this, according to the first aspect of the present invention, a control method for a mixer truck in accordance with claim 1 is provided, and the control method for a mixer truck comprises: establishing communication connection with a mixing station; receiving image information in a target discharging channel after establishing the communication connection with the mixing station, wherein the image information in the target discharging channel comprises position information of a discharging opening to be centered; carrying out driving operation prompting according to the image information in the target discharging channel, or controlling the mixer truck to carry out automatic driving according to the image information in the target discharging channel; and when a centering completion instruction is obtained, confirming that centering is completed.

According to the control method for a mixer truck provided by the present invention, when the mixer truck reaches a mixing station, it automatically establishes communication connection with the mixing station, and this ensures the information transmission between the mixer truck and the mixing station. After the communication connection between the mixer truck and the mixing station is established and after the mixer truck receives the image information in the target discharging channel, if the mixer truck does not have an automatic driving function, a driving operation prompt is sent to the driver according to the information, so as to help the driver to adjust the position of the mixer truck, thereby achieving the centering of a discharging opening and a feed hopper, the mutual operation between man power and machine, and improving centering rate; if the mixer truck has the automatic driving function, the mixer truck can be controlled to drive automatically according to the image information in the target discharging channel, so as to adjust the position of the mixer truck and then achieve the centering of the discharging opening and the feed hopper. After the mixer truck receives the information that the mixer truck has been correctly centered, it is confirmed that the centering of the mixer truck is completed. For the control method for a mixer truck in the present invention, through establishing the communication connection between the mixing station and the mixer truck, a video image around the discharging opening in the discharging channel is sent to the mixer truck far away and displayed, so that the mixer truck can know the position relation between the mixer truck and the mixing station from a long distance, for example, when the mixer truck has just reached the mixing station, it can know the discharging channel where it should go through the sent image information, and after the mixer truck enters the discharging channel, it can observe its specific position when it enters the discharging channel and its specific position when it enters the vision range of the image through the image, and then the position of the mixer truck can be adjusted according to the image and prompt information; even position deviation is relatively large, the driver can render correct operation instructions according to the prompt or image information, that is, the present invention can achieve long-distance centering, and overcomes the defect that the prior art can only judge the centering state of the discharging opening in a close range. In addition, the control method for a mixer truck in the present invention can also help the driver to adjust the position of the mixer truck, that is, when the driver is adjusting the position of the mixer truck, a prompt is sent to the driver, and the present invention achieves the mutual cooperation between man power and machine, however, in the prior art, prompt information cannot be sent when the driver is adjusting the position of the mixer truck, and the position of the mixer truck can only be adjusted according to the driver's own experience or other's prompt. Therefore, the present invention achieves checking the centering state during the centering only through the video image, and then ensures the personal safety of working staff while improves the charging efficiency of the mixer truck. Moreover, before discharging, accurate centering information needs to be received, a request discharging instruction is sent, and then discharging can be started, and this is a double insurance and greatly lowers the possibility of material overflow and leakage. This intelligent centering method for a mixer truck achieves the intelligentization of the centering of the discharging opening and the feed hopper, and greatly improves the efficiency and the safety of the charging of the mixer truck.

In addition, the control method for a mixer truck in the above embodiment provided by the present invention can further comprise following additional technical features.

In the above embodiment, preferably, the step of establishing communication connection with the mixing station specifically comprises: judging whether a vehicle-mounted communication module of the mixer truck is in an on state, and starting the vehicle-mounted communication module when the vehicle-mounted communication module is not in an on state; and searching a module around the mixer truck to be communicated when the vehicle-mounted communication module is in an on state, matching and verifying it with a searched module to be communicated, after verification, establishing communication connection with the module to be communicated which has passed verification.

In this embodiment, before establishing the communication connection between the mixing station and the mixer truck, whether the vehicle-mounted communication module is in an on state is first judged, if the module is not started, then it is started immediately; if the module has been started, other communication modules around it are scanned automatically, matching and verifying are conducted after other communication modules to be communicated are scanned, and communication connection is established between two modules if verification is passed. Therefore, the automatic networking between the mixing station and the mixer truck is achieved, network connection is established through automatic scanning, then manual operation is not required, time and effort are saved, and the overall efficiency of the mixer truck during charging is improved.

Furthermore, the vehicle-mounted communication module is always in an on state.

In the above embodiment, preferably, the image information in the target discharging channel comprises video information and/or picture information representing the relative position of the discharging opening and a feed hopper.

In this embodiment, the image information in the target discharging channel comprises at least one of the video information and the picture information of the relative position of the discharging opening and the feed hopper. Therefore, the position between the discharging opening and the feed hopper can be judged through the video information or the picture information around the discharging opening, so as to help adjust the position of the mixer truck subsequently.

In accordance with a first aspect of the invention, the control method for a mixer truck further comprises: sending mixer truck number information of the mixer truck to the mixing station after the communication connection with the mixing station is established.

After the establishment of the communication connection between the mixer truck and the mixing station is completed, the mixer truck number information of the mixer truck is sent to the mixing station, so that the mixing station checks the mixer truck number information and issues the image information around a corresponding discharging opening, thereby achieving automatically acquiring the surveillance video or picture of the discharging opening of the discharging channel, and this does not require manual selection and improves the automaticity of the mixing station.

The control method for a mixer truck further comprises: analyzing the verification information in the image information in the target discharging channel after receiving the image information in the target discharging channel, and judging whether the image information in the target discharging channel matches the mixer truck number information of the mixer truck according to the verification information; when it is judged that the image information in the target discharging channel matches the mixer truck number information of the mixer truck, executing the step of generating a driving operation prompt according to the image information in the target discharging channel or controlling the mixer truck to carry out automatic driving according to the image information in the target discharging channel.

Besides the image information in the target discharging channel, the received information further comprises the verification information in the image information in the target discharging channel, and the verification information comprises the information of the discharging opening and the mixer truck number information, and the mixer truck number information in the verification information is compared with the mixer truck number information of the mixer truck to make sure whether the information is correct, and this avoids that the mixer truck goes to a wrong discharging channel due to wrong information sending; when the mixer truck number information in the verification information matches the mixer truck number information of the mixer truck, if the mixer truck does not have an automatic driving function, a driving operation prompt is generated according to received image information in the target discharging channel, so as to remind the driver to send a control instruction to the mixer truck and adjust the position of the mixer truck, and this helps the driver adjust the position of the mixer truck, achieves the mutual cooperation between human and machine, and improves the centering rate; if the mixer truck has an automatic driving function, the position of the mixer truck is controlled automatically according to the image information in the target discharging channel.

In any one of the above embodiments, preferably, the step of carrying out driving operation prompting according to the image information in the target discharging channel comprises: analyzing and displaying the image information in the target discharging channel; and generating and displaying auxiliary identification information and/or carrying out voice navigation prompting according to the image information in the target discharging channel, wherein the auxiliary identification information comprises a position of a discharging opening to be centered, a position of the feed hopper of the mixer truck and road identification information.

In this embodiment, the received image data around the discharging opening is analyzed, and an image rendered from analyzing is displayed, and then identification information which helps the driver to judge the position of the mixer truck is generated according to the position of the discharging opening in the displayed image, and the generated auxiliary identification information is also displayed on the displayed image, before the driver sends out a control instruction, this can provide a reference for the driver, so that the driver can send out a correct control instruction according to the identification on the video image, which helps complete adjusting the position of the mixer truck, improves the centering rate of the discharging opening and the feed hopper, and thus improves the overall working efficiency of the charging process of the mixer truck. In addition, a voice navigation prompt can also be sent out according to the image information around the discharging opening, so that the driver can also adjust the position of the mixer truck according to the voice prompt without referring to the image.

Wherein, the auxiliary identification information comprises the position of a discharging opening to be centered, the position of the feed hopper of the mixer truck and road identification information.

In any one of the above embodiments, the control method for a mixer truck further comprises: generating a centering completion prompt and/or sending a request discharging instruction to the mixing station when the centering completion instruction is obtained.

In this embodiment, after the mixer truck receives the information that the mixer truck has been correctly centered, that is, after it obtains the centering completion instruction, prompt information can be selectively generated to remind the driver that centering has been completed, or the request discharging instruction is automatically sent to the mixing station, and the two operations can also be executed at the same time.

In any one of the above embodiments, the control method for a mixer truck further comprises: generating a stop discharging instruction and sending the same to the mixing station according to input information input by the user.

In this embodiment, during the discharging process, the driver can observe whether there is material overflow or leakage according to displayed image information, when material overflow or leakage occurs, the driver can timely send the stop discharging instruction to the mixing station, so as to timely adopt countermeasures, and then prevent safety accidents and avoid wasting resources.

In any one of the above embodiments, preferably, the control method for a mixer truck further comprises: receiving and displaying dispatch information, wherein the dispatch information comprises at least one of concrete model, weight and destination.

In this embodiment, the mixer truck can also receive the dispatch information sent by a scheduling device, so as to remind the driver of the information of transported goods and destination, and therefore automatic dispatch of the mixer truck is achieved; the mixer truck can directly obtain its destination to go, no additional information is needed for confirmation and no miscellaneous check or confirmation is needed, and thus working efficiency is improved. The dispatch information can specifically comprise information such as a concrete model, weight and designation.

According to the second aspect of the present invention, a control method for a mixing station in accordance with claim 8 is provided, comprising: establishing communication connection with a mixer truck; receiving the mixer truck number information of the mixer truck, and determining a target discharging channel according to the mixer truck number information; sending the image information in the target discharging channel to the mixer truck; judging whether the centering of the feed hopper of the mixer truck and a discharging opening to be centered has been completed according to the image information in the target discharging channel; generating and sending a centering completion instruction to the mixer truck after the centering of the feed hopper of the mixer truck and the discharging opening to be centered has been completed, and opening the discharging opening that has been centered, and controlling automatic discharging.

According to the control method for a mixing station provided by the embodiment of the present invention, through establishing communication connection with the mixer truck first, information transmission between the mixing station and the mixer truck is achieved, then the mixer truck number information of the mixer truck is obtained and checked; a discharging opening to be centered which corresponds to the mixer truck number information is determined after the checking, and thus the matching between the mixer truck and the corresponding discharging opening is achieved; the image information in the target discharging channel is sent to the mixer truck, then the positions of the discharging opening and a feed hopper displayed on the image information in the target discharging channel are judged according to an image recognition algorithm; whether the centering of the feed hopper of the mixer truck and the discharging opening to be centered has been completed is judged, whether the mixer truck has been centered is further judged, thus double insurance is provided for the centering of the discharging opening and the feed hopper; if it is confirmed that the centering has been completed, a centering completion instruction is sent to the mixer truck, the discharging opening which has been centered is opened, and discharging is controlled automatically, thereby achieving automatic discharging.

In any one of the above embodiments, preferably, the control method for a mixing station further comprises: controlling the discharging opening corresponding to the mixer truck to stop discharging after a stop discharging instruction sent by any one of the mixer trucks is obtained.

In this embodiment, discharging is stopped immediately once the stop discharging instruction is received, and countermeasures are adopted timely, and this prevents safety accidents and avoids wasting resources.

According to the third aspect of the present invention, a mixer truck is provided, comprising: a vehicle-mounted display screen for displaying information; a voice prompting device for carrying out voice prompting; a vehicle-mounted communication module for carrying out communication; a human-computer interaction unit for receiving user instruction information; a mixer truck control device comprising a memory and a processor, wherein a computer program is stored in the memory, and the processor is configured to implement the steps of the control method for a mixer truck in any one of the above embodiments when the computer program is executed.

In this embodiment, the mixer truck comprises the vehicle-mounted display screen, the voice prompting device, the vehicle-mounted communication module, the human-computer interaction unit and the mixer truck control device. The vehicle-mounted display screen is used for the image information and the identifications sent from the mixing station and is used to send a voice prompt, so as to provide information for reference by the driver. The vehicle-mounted communication module is used to establish the communication connection between the mixing station and the mixer truck, and can adopt at least one of a WIFI module, a blue tooth module, a mobile communication module, a UWB (Ultra-wide Bandwidth) and a V2X (a vehicle wireless communication technology). The human-computer interaction unit is used to receive a control instruction from the driver. The mixer truck control device is used to store the computer program and implement the control method for a mixer truck provided by the first aspect of the present invention when the computer program is executed. Meanwhile, according to the mixer truck provided by the embodiment of the present invention, as it comprises the memory and the processor and the processor is configured to implement the steps of the control method for a mixer truck provided by the first aspect of the present invention when the computer program is executed, the mixer truck comprises all the technical effect of the control method for a mixer truck, which are not repeated herein.

Furthermore, the vehicle-mounted communication module is always in an on state.

According to the fourth aspect of the present invention, a mixing station is provided, and it comprises: a mixing station communication module for communicating with the vehicle-mounted communication module of a mixer truck; a collecting device, mounted corresponding to a discharging opening and used for collecting an image around the discharging opening; a mixing station control device, comprising a memory and a processor, wherein a computer program is stored on the memory, and the processor is configured to implement the steps of the control method for a mixer station in any one of the above embodiments when the computer program is executed. Furthermore, the collecting device can collect the image of the overall discharging channel where the discharging opening corresponding to the collecting device is located.

In this embodiment, the mixing station comprises the mixing station communication module, the collecting device and the mixing station control device. The mixing station communication module is used for establishing communication connection with the mixer truck communication module to transmit information between the mixing station and the mixer truck, and can adopt at least one of a WIFI module, a blue tooth module, a mobile communication module, a UWB (Ultra-wide Bandwidth) and a V2X (a vehicle wireless communication technology). The collecting device is mounted corresponding to the discharging opening and is used for collecting the image around the discharging opening, and the vision of the image collected by the collecting device comprises the overall discharging channel, when the discharging channel is relatively short, using one collecting device can contain the overall discharging channel within the vision of the collecting device; when the discharging channel is relatively long, multiple collecting devices can be configured so that the overall discharging channel is contained within the vision of the collecting devices, so that the mixer truck can appear in the vision of the collecting devices once it enters the discharging channel, and the driver judges the position of the mixer truck according to the image collected by the collecting devices. The mixing station control device is used to store the computer program and implement the control method for a mixing station provided by the second aspect of the present invention when the computer program is executed. Meanwhile, according to the mixing station provided by the embodiment of the present invention, as it comprises the memory and the processor and the processor is configured to implement the steps of the control method for a mixing station provided by the second aspect of the present invention when the computer program is executed, the mixing station comprises all the technical effect of the control method for a mixing station, which are not repeated herein.

Furthermore, the mixing station communication module is always in an on state.

According to the fifth aspect of the present invention, a centering control system is provided, and the centering control system comprises: a vehicle-mounted control terminal, comprising a vehicle-mounted memory and a vehicle-mounted processor, wherein a computer program is stored on the vehicle-mounted memory, and the vehicle-mounted processor is configured to implement the steps of the control method for a mixer truck in any one of the above embodiments when the computer program is executed; and a mixing station control terminal, comprising a mixing station memory and a mixing station processor, wherein a computer program is stored on the mixing station memory, and the mixing station processor is configured to implement the steps of the control method for a mixing station in any one of the above embodiments when the computer program is executed.

According to the centering control system provided by the embodiment of the present invention, it comprises the vehicle-mounted memory, the vehicle-mounted processor, the mixing station memory and the mixing station processor. Wherein a computer program is stored on the vehicle-mounted memory, and the vehicle-mounted processor is configured to implement the steps of the control method for a mixer truck in any one of the above embodiments when the computer program is executed; a computer program is stored on the mixing station memory, and the mixing station processor is configured to implement the steps of the control method for a mixing station in any one of the above embodiments when the computer program is executed. Therefore, the centering control system comprises all the technical effect of the control method for a mixer truck and the control method for a mixing station, which are not repeated herein.

Additional aspects and advantages of the present invention will be obvious from the following description or can be understood from the implementation of the present invention.

### BRIEF DESCRIPTION OF THE DRAWINGS

The above and/or additional aspects and advantages of the present invention will become obvious and can be understood easily from the description of embodiments in combination with the accompanying drawings, wherein:
FIG. 1 is a schematic view of the flow of a control method for a mixer truck according to an embodiment of the present invention;
FIG. 2 is a schematic view of the specific steps of S102 in FIG. 1;
FIG. 3 is a schematic view of the specific steps of S106 in FIG. 1;
FIG. 4 is a schematic view of the flow of a control method for a mixing station provided by another embodiment of the present invention;
FIG. 5 is a block diagram of a mixer truck of the present invention;
FIG. 6 is a block diagram of a mixing station of the present invention;
FIG. 7 is a block diagram of a centering control system in the present invention;
FIG. 8 is a schematic view of the overall hardware layout of the mixer truck and the mixing station of the present invention; and
FIG. 9 is a schematic view of the flow of a control method for a mixer truck provided by another embodiment of the present invention.

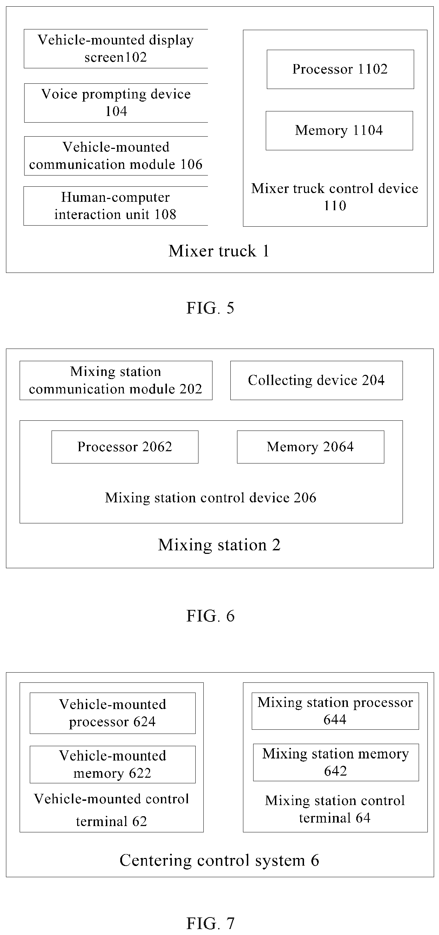

Wherein, the corresponding relationship between reference signs in FIG.5 to FIG. 8 and the names of the components is as follow:

1 mixer truck; 102 vehicle-mounted display screen; 104 voice prompting device; 106 vehicle-mounted communication module; 108 human-computer interaction unit; 110 mixer truck control device; 1102 processor; 1104 memory; 2 mixing station; 202 mixing station communication module; 204 collecting device; 206 mixing station control device; 2062 processor; 2064 memory; 3 feed hopper; 4 discharging opening; 5 discharging channel; 6 centering control system; 62 vehicle-mounted control terminal; 622 vehicle-mounted memory; 624 vehicle-mounted processor; 64 mixing station control terminal; 642 mixing station memory; 644 mixing station processor.

### DETAILED DESCRIPTION OF THE INVENTION

To more clearly understand the above objects, features and advantages of the present invention, the present invention will be further detailed hereinafter in combination with the accompanying drawings and embodiments.

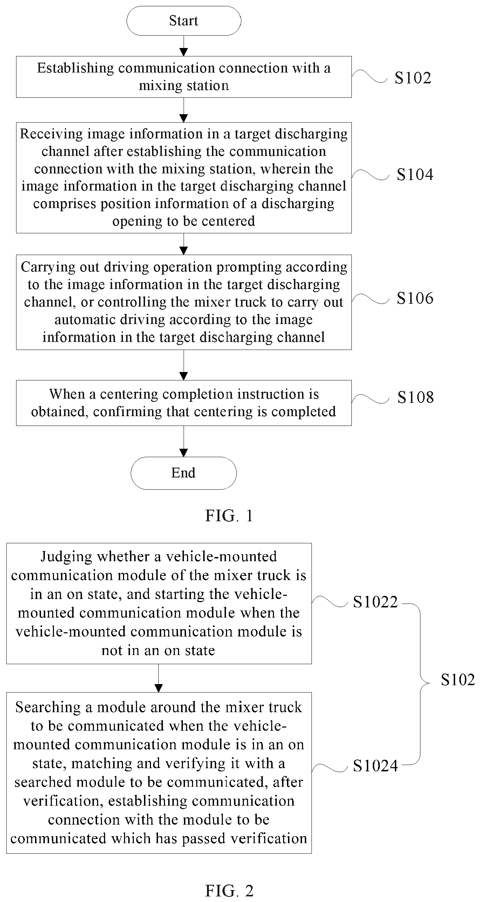

The mixer truck and the control method thereof, and the mixing station and the control method thereof in some embodiments of the present invention will be described hereinafter by referring to FIG 1 to FIG 9.

### Embodiment 1

According to the embodiment of the first aspect of the present invention, a control method for a mixer truck is provide, as shown in FIG 1, and the method comprises:
S102, establishing communication connection with a mixing station;
S104, receiving image information in a target discharging channel after establishing the communication connection with the mixing station, wherein the image information in the target discharging channel comprises position information of a discharging opening to be centered;
S106, carrying out driving operation prompting according to the image information in the target discharging channel, or controlling the mixer truck to carry out automatic driving according to the image information in the target discharging channel; and
S108, when a centering completion instruction is obtained, confirming that centering is completed.

For the control method in this embodiment, when the mixer truck reaches the mixing station, it automatically establishes communication connection with the mixing station, and this ensures the information transmission between the mixer truck and the mixing station. After the communication connection between the mixer truck and the mixing station has been established and after the mixer truck receives the image information in the target discharging channel, if the mixer truck does not have an automatic driving function, a driving operation prompt is sent to the driver according to the information, so as to help the driver to adjust the position of the mixer truck, thereby achieving the centering of a discharging opening and a feed hopper, the mutual operation between man power and machine, and improving centering rate; if the mixer truck has the automatic driving function, the mixer truck can be controlled to drive automatically according to the image information in the target discharging channel, so as to adjust the position of the mixer truck and then achieve the centering of the discharging opening and the feed hopper. After the mixer truck receives the information that the mixer truck has been correctly centered, it is confirmed that the centering of the mixer truck is completed. For the control method for a mixer truck in the present invention, through establishing the communication connection between the mixing station and the mixer truck, a video image around the discharging opening in the discharging channel is sent to the mixer truck far away and displayed, so that the mixer truck can know the position relation between the mixer truck and the mixing station from a long distance, for example, when the mixer truck has just reached the mixing station, it can know the discharging channel where it should go through the sent image information, and after the mixer truck enters the discharging channel, it can observe its specific position when it enters the discharging channel and its specific position when it enters the vision range of the image through the image, and then the position of the mixer truck can be adjusted according to the image and prompt information; even position deviation is relatively large, the driver can render correct operation instructions according to the prompt or image information, that is, the present invention can achieve long-distance centering, and overcomes the defect that the prior art can only judge the centering state of the discharging opening in a close range. In addition, the control method for a mixer truck in the present invention can also help the driver to adjust the position of the mixer truck, that is, when the driver is adjusting the position of the mixer truck, a prompt is sent to the driver, and the present invention achieves the mutual cooperation between man power and machine, however, in the prior art, prompt information cannot be sent when the driver is adjusting the position of the mixer truck, and the position of the mixer truck can only be adjusted according to the driver's own experience or other's prompt. Therefore, the present invention achieves checking the centering state during the centering only through the video image, and then ensures the personal safety of working staff while improves the charging efficiency of the mixer truck. Moreover, before discharging, accurate centering information needs to be received, a request discharging instruction is sent, and then discharging can be started, and this is a double insurance and greatly lowers the possibility of material overflow and leakage. This intelligent centering method for a mixer truck achieves the intelligentization of the centering of the discharging opening and the feed hopper, and greatly improves the efficiency and the safety of the charging of the mixer truck.

Furthermore, FIG 2 is a schematic view of the specific steps of S102 in FIG 1, that is, the step of establishing communication connection with the mixing station specifically comprises:
S1022, judging whether a vehicle-mounted communication module of the mixer truck is in an on state, and starting the vehicle-mounted communication module when the vehicle-mounted communication module is not in an on state; and
S1024, searching a module around the mixer truck to be communicated when the vehicle-mounted communication module is in an on state, matching and verifying it with a searched module to be communicated, after verification, establishing communication connection with the module to be communicated which has passed verification.

**In** this embodiment, before establishing the communication connection between the mixing station and the mixer truck, whether the vehicle-mounted communication module is in an on state is first judged, if the module is not started, then it is started immediately; if the module has been started, other communication modules around it are scanned automatically, matching and verifying are conducted after other communication modules to be communicated are scanned, and communication connection is established between two modules if verification is passed. Therefore, the automatic networking between the mixing station and the mixer truck is achieved, network connection is established through automatic scanning, then manual operation is not required, time and effort are saved, and the overall efficiency of the mixer truck during the charging process is improved.

Furthermore, the vehicle-mounted communication module is always in an on state.

**In** any one of the above embodiments, preferably, it further comprises that the image information in the target discharging channel comprises video information and/or picture information representing the relative position of the discharging opening and the feed hopper.

**In** this embodiment, the image information in the target discharging channel comprises at least one of the video information and the picture information of the relative position of the discharging opening and the feed hopper. Therefore, the position between the discharging opening and the feed hopper can be judged through the video information or the picture information around the discharging opening, so as to help adjust the position of the mixer truck subsequently.

In any one of the above embodiments, preferably, the control method for a mixer truck further comprises sending the mixer truck number information of the mixer truck to the mixing station after the communication connection with the mixing station has been established.

In this embodiment, after the establishment of the communication connection between the mixer truck and the mixing station is completed, the mixer truck number information of the mixer truck is sent to the mixing station, so that the mixing station checks the mixer truck number information and issues the image information around a corresponding discharging opening, thereby achieving automatically acquiring the surveillance video or picture of the discharging opening of the discharging channel, and this does not require manual selection and improves the automaticity of the mixing station.

In any one of the above embodiments, preferably, the control method for a mixer truck further comprises that after receiving the image information in the target discharging channel, the verification information in the image information in the target discharging channel is analyzed, and whether the image information in the target discharging channel matches the mixer truck number information of the mixer truck is judged according to the verification information; when it is judged that the image information in the target discharging channel matches the mixer truck number information of the mixer truck, the step of generating a driving operation prompt according to the image information in the target discharging channel or controlling the mixer truck to carry out automatic driving according to the image information in the target discharging channel is executed.

In this embodiment, besides the image information in the target discharging channel, the received information further comprises the verification information in the image information in the target discharging channel, and the verification information comprises the information of the discharging opening 4 and the mixer truck number information, and the mixer truck number information in the verification information is compared with the mixer truck number information of the mixer truck to make sure whether the information is correct, and this avoids that the mixer truck goes to a wrong discharging channel due to wrong information sending; when the mixer truck number information in the verification information matches the mixer truck number information of the mixer truck, if the mixer truck does not have the automatic driving function, a driving operation prompt is generated according to received image information in the target discharging channel, so as to remind the driver to send a control instruction to the mixer truck and adjust the position of the mixer truck, and this helps the driver adjust the position of the mixer truck, achieves the mutual cooperation between human and machine, and improves the centering rate; if the mixer truck has the automatic driving function, the position of the mixer truck is controlled automatically according to the image information in the target discharging channel.

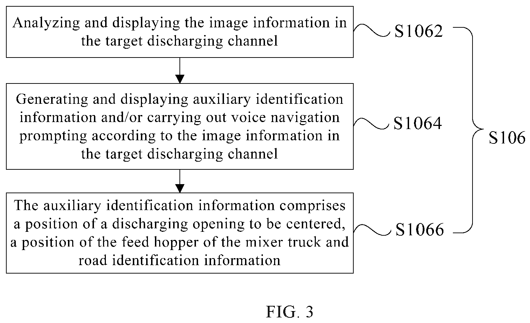

Furthermore, FIG 3 is a schematic view of the steps of carrying out driving operation prompting according to the image information in the target discharging channel in S106 in FIG 1, that is, the step of carrying out driving operation prompting according to the image information in the target discharging channel comprises:
S1062, analyzing and displaying the image information in the target discharging channel;
S1064, generating and displaying an auxiliary identification information and/or carrying out voice navigation prompting according to the image information in the target discharging channel; and
S1066, the auxiliary identification information comprises the position of a discharging opening to be centered, the position of the feed hopper of the mixer truck and road identification information.

In this embodiment, the received image data around the discharging opening is analyzed, and an image rendered from analyzing is displayed, and then identification information which helps the driver to judge the position of the mixer truck is generated according to the position of the discharging opening in the displayed image, and the generated auxiliary identification information is also displayed on the displayed image, before the driver sends out a control instruction, this can provide a reference for the driver, so that the driver can send out a correct control instruction according to the identification on the video image, which helps complete adjusting the position of the mixer truck, improves the centering rate of the discharging opening and the feed hopper, and thus improves the overall working efficiency of the charging process of the mixer truck. In addition, a voice navigation prompt can also be sent out according to the image information around the discharging opening, so that the driver can also adjust the position of the mixer truck according to the voice prompt without referring to the image.

Wherein, the auxiliary identification information comprises the position of a discharging opening to be centered, the position of the feed hopper of the mixer truck and road identification information.

In any one of the above embodiments, the control method for a mixer truck further comprises generating a centering completion prompt and/or sending a request discharging instruction to the mixing station when a centering completion instruction is obtained.

In this embodiment, after the mixer truck receives the information that the mixer truck has been correctly centered, that is, after it obtains the centering completion instruction, prompt information can be selectively generated to remind the driver that centering has been completed, or the request discharging instruction is automatically sent to the mixing station, and the two operations can also be executed at the same time.

In any one of the above embodiments, preferably, the control method for a mixer truck further comprises generating a stop discharging instruction and sending the same to the mixing station according to input information input by the user.

In this embodiment, during the discharging process, the driver can observe whether there is material overflow or leakage according to displayed image information, when material overflow or leakage occurs, the driver can timely send the stop discharging instruction to the mixing station, so as to timely adopt countermeasures, and then prevent safety accidents and avoid wasting resources.

In any one of the above embodiments, preferably, the control method for a mixer truck further comprises receiving and displaying dispatch information, wherein the dispatch information comprises at least one of a concrete model, weight and destination.

In this embodiment, the mixer truck can also receive the dispatch information sent by a scheduling device, so as to remind the driver of the information of transported goods and destination, and therefore automatic dispatching of the mixer truck is achieved; the mixer truck can directly obtain its destination to go, no additional information is needed for confirmation and no miscellaneous check or confirmation is needed, and thus working efficiency is improved. The dispatch information can specifically comprise information such as a concrete model, weight and designation.

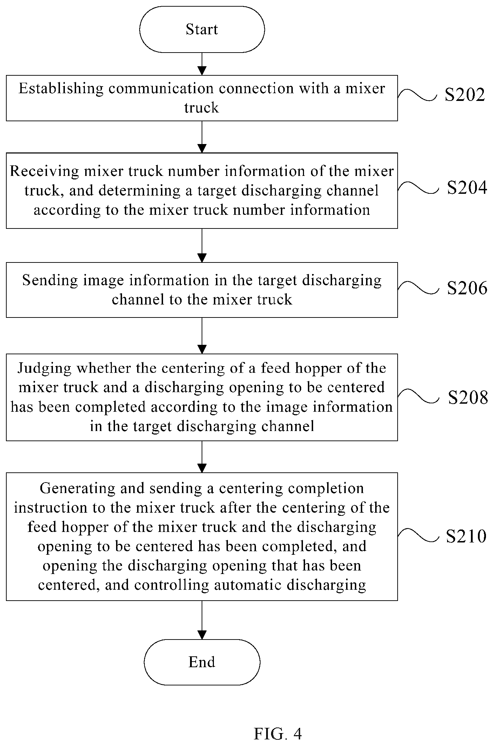

According to the embodiment of the second aspect of the present invention, a control method for a mixing station is provided, as shown in FIG 4, and the method comprises:
S202, establishing communication connection with a mixer truck;
S204, receiving the mixer truck number information of the mixer truck, and determining a target discharging channel according to the mixer truck number information;
S206, sending the image information in the target discharging channel to the mixer truck;
S208, judging whether the centering of a feed hopper of the mixer truck and a discharging opening to be centered has been completed according to the image information in the target discharging channel; and
S210, generating and sending a centering completion instruction to the mixer truck after the centering of the feed hopper of the mixer truck and the discharging opening to be centered has been completed, and opening the discharging opening that has been centered, and controlling automatic discharging.

In this embodiment, according to this control method, through establishing communication connection with the mixer truck first, information transmission between the mixing station and the mixer truck is achieved, then the mixer truck number information of the mixer truck is obtained and checked; a discharging opening to be centered which corresponds to the mixer truck number information is determined after the checking, and thus the matching between the mixer truck and the corresponding discharging opening is achieved; the image information in the target discharging channel is sent to the mixer truck, then the positions of the discharging opening and a feed hopper displayed on the image information in the target discharging channel are judged according to an image recognition algorithm; whether the centering of the feed hopper of the mixer truck and the discharging opening to be centered has been completed is judged, whether the mixer truck has been centered is further judged, thus double insurance is provided for the centering of the discharging opening and the feed hopper; if it is confirmed that the centering has been completed, a centering completion instruction is sent to the mixer truck, the discharging opening which has been centered is opened, and discharging is controlled automatically, thereby achieving automatic discharging.

In any one of the above embodiments, preferably, the control method for a mixing station further comprises: controlling the discharging opening corresponding to the mixer truck to stop discharging after a stop discharging instruction sent by any one of the mixer trucks is obtained.

In this embodiment, discharging is stopped immediately once the stop discharging instruction is received, and countermeasures are adopted timely, and this prevents safety accidents and avoids wasting resources.

According to the embodiment of the third aspect of the present invention, a mixer truck 1 is provided, as shown in FIG 5, the mixer truck 1 comprises: a vehicle-mounted display screen 102 for displaying information; a voice prompting device 104 for carrying out voice prompting; a vehicle-mounted communication module 106 for carrying out communication; a human-computer interaction unit 108 for receiving user instruction information; a mixer truck control device 110 comprising a memory 1104 and a processor 1102, wherein a computer program is stored in the memory 1104, and the processor 1102 is configured to implement the steps of the control method for the mixer truck 1 in any one of the above embodiments when the computer program is executed.

In this embodiment, the mixer truck 1 comprises the vehicle-mounted display screen 102, the voice prompting device 104, the vehicle-mounted communication module 106, the human-computer interaction unit 108 and the mixer truck control device 110. The vehicle-mounted display screen 102 is used for the image information and the identifications sent from the mixing station 2 and is used to send a voice prompt, so as to provide information for reference by the driver. The vehicle-mounted communication module 106 is used to establish the communication connection between the mixing station 2 and the mixer truck 1, and can adopt at least one of a WIFI module, a blue tooth module, a mobile communication module, a UWB (Ultra-wide Bandwidth) and a V2X (a vehicle wireless communication technology). The human-computer interaction unit 108 is used to receive a control instruction from the driver. The mixer truck control device 110 is used to store the computer program and implement the control method for a mixer truck provided by the embodiment of the first aspect of the present invention when the computer program is executed. The above devices can be integrated at one central control screen. Meanwhile, according to the mixer truck 1 provided by the embodiment of the present invention, as it comprises the memory 1104 and the processor 1102 and the processor 1102 is configured to implement the steps of the control method for a mixer truck provided by the embodiment of the first aspect of the present invention when the computer program is executed, the mixer truck 1 comprises all the technical effect of the control method for the mixer truck, which are not repeated herein.

Furthermore, the vehicle-mounted communication module 106 is always in an on state.

According to the embodiment of the fourth aspect of the present invention, a mixing station 2 is provided, as shown in FIG 6, the mixing station 2 comprises: a mixing station communication module 202 for communicating with the vehicle-mounted communication module 106 of the mixer truck 1; a collecting device 204, mounted corresponding to the discharging opening 4 and used for collecting the image around the discharging opening 4; a mixing station control device 206 comprising a memory 2064 and a processor 2062, wherein a computer program is stored in the memory 2064, and the processor 2062 is configured to implement the steps of the control method for a mixer station in any one of the above embodiments when the computer program is executed.

In this embodiment, the mixing station 2 comprises the mixing station communication module 202, the collecting device 204 and the mixing station control device 206. The mixing station communication module 202 is used for establishing communication connection with the mixer truck communication module to transmit information between the mixing station 2 and the mixer truck 1, and can adopt at least one of a WIFI module, a blue tooth module, a mobile communication module, a UWB (Ultra-wide Bandwidth) and a V2X (a vehicle wireless communication technology). The collecting device 204 is mounted corresponding to the discharging opening 4 and is used for collecting the image around the discharging opening 4, and the vision of the image collected by the collecting device 204 comprises the overall discharging channel 5, when the discharging channel 5 is relatively short, using one collecting device 204 can contain the overall discharging channel 5 within the vision of the collecting device 204; when the discharging channel 5 is relatively long, multiple collecting devices 204 can be configured so that the overall discharging channel 5 is contained within the vision of the collecting devices 204, so that the mixer truck 1 can appear in the vision of the collecting devices 204 once it enters the discharging channel 5, and the driver judges the position of the mixer truck 1 according to the image collected by the collecting devices 204. The mixing station control device 206 is used to store the computer program and implement the control method for a mixing station provided by the embodiment of the second aspect of the present invention when the computer program is executed. Meanwhile, according to the mixing station 2 provided by the embodiment of the present invention, as it comprises the memory 2064 and the processor 2062 and the processor 2062 is configured to implement the steps of the control method for a mixing station provided by the embodiment of the second aspect of the present invention when the computer program is executed, the mixing station 2 comprises all the technical effect of the control method for a mixing station, which are not repeated herein.

Furthermore, the mixing station communication module 202 is always in an on state.

According to the embodiment of the fifth aspect of the present invention, a centering control system 6 is provided, as shown in FIG 7, it comprises: a vehicle-mounted control terminal 62, comprising a vehicle-mounted memory 622 and a vehicle-mounted processor 624, wherein a computer program is stored on the vehicle-mounted memory 622, and the vehicle-mounted processor 624 is configured to implement the steps of the control method for a mixer truck in any one of the above embodiments when the computer program is executed; a mixing station control terminal 64, comprising a mixing station memory 642 and a mixing station processor 644, wherein a computer program is stored on the mixing station memory 642, and the mixing station processor 644 is configured to implement the steps of the control method for a mixing station in any one of the above embodiments when the computer program is executed.

According to the centering control system provided by the embodiment of the present invention, it comprises the vehicle-mounted memory 622, the vehicle-mounted processor 624, the mixing station memory 642 and the mixing station processor 644. Wherein a computer program is stored on the vehicle-mounted memory 622, and the vehicle-mounted processor 624 is configured to implement the steps of the control method for a mixer truck in any one of the above embodiments when the computer program is executed; a computer program is stored on the mixing station memory 642, and the mixing station processor 644 is configured to implement the steps of the control method for a mixing station in any one of the above embodiments when the computer program is executed. Therefore, the centering control system comprises all the technical effect of the control method for a mixer truck and the control method for a mixing station, which are not repeated herein.

### Embodiment 2

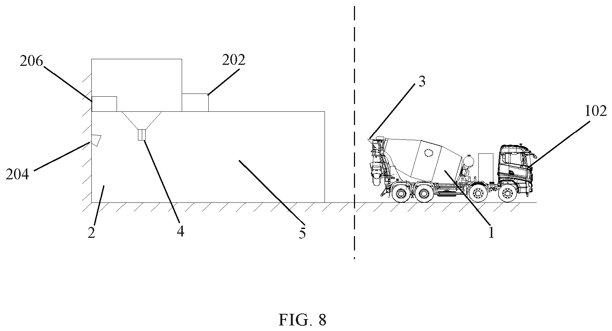

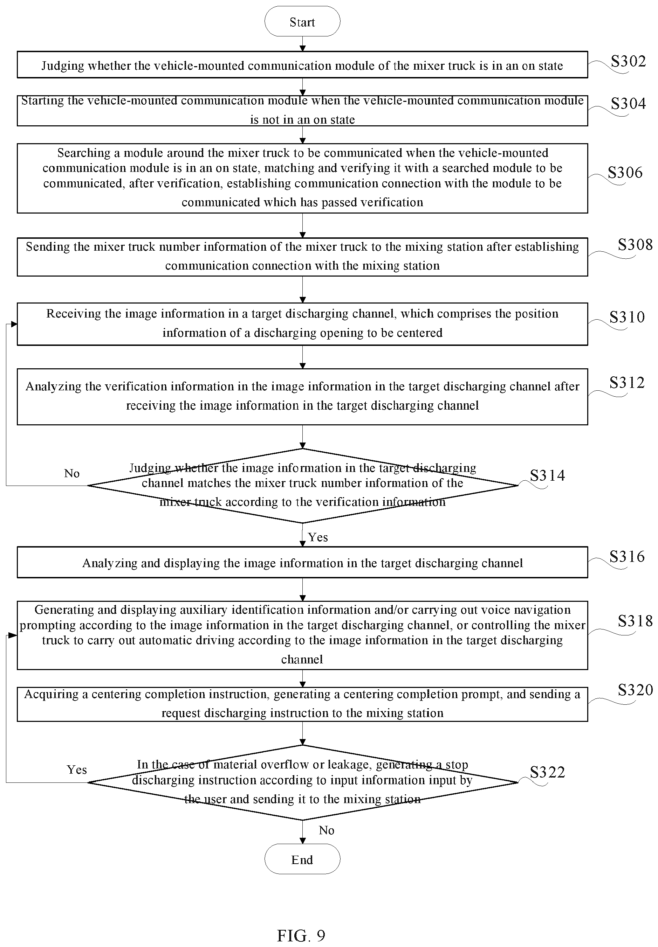

According to the embodiment of another aspect of the present invention, a control method for a mixer truck is provided, as shown in FIG 8 and FIG 9, and the method comprises:
S302, judging whether the vehicle-mounted communication module of the mixer truck is in an on state;
S304, starting the vehicle-mounted communication module when the vehicle-mounted communication module is not in an on state;
S306, searching a module around the mixer truck to be communicated when the vehicle-mounted communication module is in an on state, matching and verifying it with a searched module to be communicated, after verification, establishing communication connection with the module to be communicated which has passed verification;
S308, sending the mixer truck number information of the mixer truck to the mixing station after establishing communication connection with the mixing station;
S310, receiving the image information in a target discharging channel, which comprises the position information of a discharging opening to be centered;
S312, analyzing the verification information in the image information in the target discharging channel after receiving the image information in the target discharging channel;
S314, judging whether the image information in the target discharging channel matches the mixer truck number information of the mixer truck, if no, feeding back to the mixing station and returning to S310, and if yes, executing S316;
S316, analyzing and displaying the image information in the target discharging channel;
S318, generating and displaying auxiliary identification information and/or carrying out voice navigation prompting according to the image information in the target discharging channel, or controlling the mixer truck to carry out automatic driving according to the image information in the target discharging channel;
S320, acquiring a centering completion instruction, generating a centering completion prompt, and sending a request discharging instruction to the mixing station; and
S322, in the case of material overflow or leakage, generating a stop discharging instruction according to input information input by the user and sending it to the mixing station, and returning to S318; in the case of no material overflow or leakage, completing charging.

In this embodiment, before establishing the communication connection between the mixing station 2 and the mixer truck 1, whether the vehicle-mounted communication module 106 is in an on state is first judged, if the module is not started, then it is started immediately; if the module has been started, other communication modules around it are scanned automatically, matching and verifying are conducted after other communication modules to be communicated are scanned, and communication connection is established between two modules if verification is passed. Therefore, the automatic networking between the mixer truck 1 and the mixing station 2 is achieved, network connection is established through automatic scanning, then manual operation is not required, time and effort are saved, and the overall efficiency of the mixer truck during the charging process is improved. Besides the image information in the target discharging channel 5, the received information further comprises the verification information in the image information in the target discharging channel 5, and the verification information comprises the information of the discharging opening 4 and the mixer truck number information, and the mixer truck number information in the verification information is compared with the mixer truck number information of the mixer truck to make sure whether the information is correct, and this avoids that the mixer truck goes to a wrong discharging channel 5 due to wrong information sending; when the mixer truck number information in the verification information matches the mixer truck number information of the mixer truck 1, if the mixer truck 1 does not have the automatic driving function, a driving operation prompt is generated according to received image information in the target discharging channel 5, so as to remind the driver to send a control instruction to the mixer truck 1 and adjust the position of the mixer truck 1, and this helps the driver adjust the position of the mixer truck, achieves the mutual cooperation between man power and machine, and improves the centering rate; if the mixer truck 1 has the automatic driving function, the position of the mixer truck 1 is controlled automatically according to the image information in the target discharging channel 5. The received image data around the discharging opening 4 is analyzed, and an image rendered from analyzing is displayed, and then identification information which helps the driver to judge the position of the mixer truck 1 is generated according to the position of the discharging opening 4 in the displayed image, and the generated auxiliary identification information is also displayed on the displayed image, before the driver sends out a control instruction, this can provide a reference for the driver, so that the driver can send out a correct control instruction according to the identification on the video image, which helps complete adjusting the position of the mixer truck 1, improves the centering rate of the discharging opening 4 and the feed hopper 3, and thus improves the overall working efficiency of the charging process of the mixer truck 1. In addition, a voice navigation prompt can also be sent out according to the image information around the discharging opening 4, so that the driver can also adjust the position of the mixer truck 1 according to the voice prompt without referring to the image. During the discharging process, the driver can observe whether there is material overflow or leakage according to displayed image information, when material overflow or leakage occurs, the driver can timely send the stop discharging instruction to the mixing station 2, so as to timely adopt countermeasures, and then prevent safety accidents and avoid wasting resources. The mixer truck 1 can also receive the dispatch information sent by a scheduling device, so as to remind the driver of the information of transported goods and destination, and therefore automatic dispatching of the mixer truck 1 is achieved; the mixer truck 1 can directly obtain its destination to go, no additional information is needed for confirmation and no miscellaneous check or confirmation is needed, and thus working efficiency is improved. The dispatch information can specifically comprise information such as a concrete model, weight and designation.

Herein, one point that should be emphasized is that the methods in the present invention are not limited to the mixer truck or mixing station, and the control method for the mixing station can also be applied to material stations such as a pitch station and an oil tank station; the control method for the mixer truck can also be applied to vehicles such as a pitch carrier and an oil tank truck, and can also be applied to other similar occasions, and are not limited to the mixer truck or the mixing station in the embodiments.

In the present invention, the term of "multiple" refers to two or more than two, unless otherwise indicated clearly. The terms of "mount", "connected with", "connect to", "fix" and the like should be understood in a broad sense, for example, the term "connected with" can be a fixed connection, a detachable connection, or an integral connection; the term "connected with" can be a direct connection or an indirect connection through an intermediate medium. For a person skilled in the art, they may understand the specific meanings of the above-mentioned terms in the present disclosure according to specific circumstances.

In the specification of the present invention, the terms of "an embodiment", "some embodiments", and the like mean that the specific features, structures, materials or characteristics described in combination with the embodiment or example are contained in at least one embodiment or example of the present invention. In the specification, the illustrative expression of the above terms may not indicate the same embodiment or example. In addition, the specific features, structures, materials or characteristics described above may be combined in an appropriate method in one or more of any embodiments or examples.

## Claims

1. A control method for a mixer truck (1), comprising:
establishing communication connection with a mixing station (2);
sending mixer truck number information of the mixer truck (1) to the mixing (2) station after the communication connection with the mixing station is established; **charaterisedby**
receiving image information in a target discharging channel after establishing the communication connection with the mixing station (2), wherein the image information in the target discharging channel comprises position information of a discharging opening (4) to be centered;
carrying out driving operation prompting according to the image information in the target discharging channel, or controlling the mixer truck (1) to carry out automatic driving according to the image information in the target discharging channel; and
when a centering completion instruction is obtained, confirming that centering is completed, wherein,
analyzing the verification information in the image information in the target discharging channel after receiving the image information in the target discharging channel, and judging whether the image information in the target discharging channel matches the mixer truck number information of the mixer truck according to the verification information; when it is judged that the image information in the target discharging channel matches the mixer truck number information of the mixer truck (1), executing the step of generating a driving operation prompt according to the image information in the target discharging channel or controlling the mixer truck to carry out automatic driving according to the image information in the target discharging channel.

2. The control method for a mixer truck (1) according to claim 1, wherein the step of establishing communication connection with the mixing station (2) specifically comprises:
judging whether a vehicle-mounted communication module (106) of the mixer truck (1) is in an on state, and starting the vehicle-mounted communication module (106) when the vehicle-mounted communication module (106) is not in an on state; and
searching a module around the mixer truck (1) to be communicated when the vehicle-mounted communication module (106) is in an on state, matching and verifying it with a searched module to be communicated, after verification, establishing communication connection with the module to be communicated which has passed verification.

3. The control method for a mixer truck (1) according to claim 1, wherein
the image information in the target discharging channel comprises video information and/or picture information representing the relative position of the discharging opening (4) and a feed hopper (3).

4. The control method for a mixer truck (1) according to claim 1, wherein, the step of carrying out driving operation prompting according to the image information in the target discharging channel comprises:
analyzing and displaying the image information in the target discharging channel; and
generating and displaying auxiliary identification information and/or carrying out voice navigation prompting according to the image information in the target discharging channel,
wherein the auxiliary identification information comprises a position of a discharging opening (4) to be centered, a position of the feed hopper (3) of the mixer truck (1) and road identification information.

5. The control method for a mixer truck (1) according to claim 1, further comprising:
generating a centering completion prompt and/or sending a request discharging instruction to the mixing station (2) when the centering completion instruction is obtained.

6. The control method for a mixer truck (1) according to claim 5, further comprising:
generating a stop discharging instruction and sending the same to the mixing station (2) according to input information input by the user.

7. The control method for a mixer truck (1) according to claim 1, further comprising:
receiving and displaying dispatch information, wherein the dispatch information comprises at least one of concrete model, weight and destination.

8. A control method for a mixing station (2), comprising:
establishing communication connection with a mixer truck (1);
receiving mixer truck number information of the mixer truck (1), **characterised by** determining a target discharging channel according to the mixer truck number information;
sending image information in the target discharging channel to the mixer truck (1);
judging whether the centering of a feed hopper (3) of the mixer truck (1) and a discharging opening (4) to be centered has been completed according to the image information in the target discharging channel;
analyzing the verification information in the image information in the target discharging channel after receiving the image information in the target discharging channel, and judging whether the image information in the target discharging channel matches the mixer truck number information of the mixer truck according to the verification information; when it is judged that the image information in the target discharging channel matches the mixer truck number information of the mixer truck (1), executing the step of generating a driving operation prompt according to the image information in the target discharging channel or controlling the mixer truck to carry out automatic driving according to the image information in the target discharging channel; and
generating and sending a centering completion instruction to the mixer truck after the feed hopper (3) of the mixer truck and the discharging opening (4) to be centered has been completed, and opening the discharging opening (4) that has been centered, and controlling automatic discharging.

9. The control method for a mixing station (2) according to claim 8, further comprising:
controlling the discharging opening (4) corresponding to the mixer truck (1) to stop discharging after a stop discharging instruction sent by any one of the mixer trucks (1) is obtained.

10. A mixer truck (1), comprising:
a vehicle-mounted display screen (102) for displaying information;
a vehicle-mounted communication module (106) for carrying out communication;
a human-computer interaction unit (108) for receiving user instruction information; **characterised by** comprising a voice prompting device (104) for carrying out voice prompting; and
a mixer truck control device (110), comprising a memory (1104) and a processor (1102), wherein a computer program is stored in the memory (1104), and the processor is configured to implement the steps of the control method for a mixer truck (1) in any one of claims 1 to 7 when the computer program is executed.

11. A mixing station (2), comprising:
a mixing station communication module (202) for communicating with the vehicle-mounted communication module (106) of a mixer truck (1);
**characterised by** comprising a collecting device (204), mounted corresponding to a discharging opening (4) and used for collecting an image around the discharging opening (4); and
a mixing station control device (206), comprising a memory (2062) and a processor (2064), wherein a computer program is stored on the memory (2062), and the processor (2064) is configured to implement the steps of the control method for a mixer station (2) according to claim 8 or 9 when the computer program is executed.

12. A centering control system (6), **characterised by** comprising:
a vehicle-mounted control terminal (62), comprising a vehicle-mounted memory (622) and a vehicle-mounted processor (624), wherein a computer program is stored on the vehicle-mounted memory (622), and the vehicle-mounted processor (624) is configured to implement the steps of the control method for a mixer truck (1) according to any of claims 1 to 7 when the computer program is executed; and
a mixing station control terminal (64), comprising a mixing station memory (642) and a mixing station processor (644), wherein a computer program is stored on the mixing station memory (642), and the mixing station processor (644) is configured to implement the steps of the control method for a mixing station (2) according to claim 8 or 9 when the computer program is executed.

## Patentansprüche

1. Steuerverfahren für einen Transportmischer (1), umfassend:
Herstellen einer Kommunikationsverbindung mit einer Mischstation (2);
Senden von Transportmischernummerinformationen des Transportmischers (1) an die Mischstation (2), nachdem die Kommunikationsverbindung mit der Mischstation hergestellt wurde; **gekennzeichnet durch**
Empfangen von Bildinformationen in einem Zielauslasskanal nach dem Herstellen der Kommunikationsverbindung mit der Mischstation (2), wobei die Bildinformationen in dem Zielauslasskanal Positionsinformationen einer zu zentrierenden Auslassöffnung (4) umfassen;
Ausführen einer Fahrbetriebsaufforderung gemäß den Bildinformationen in dem Zielauslasskanal oder Steuern des Transportmischers (1), um ein automatisches Fahren gemäß den Bildinformationen in dem Zielauslasskanal auszuführen; und
wenn eine Anweisung zum Abschließen des Zentrierens erhalten wird, Bestätigen, dass das Zentrieren abgeschlossen ist, wobei,
Analysieren der Verifizierungsinformationen in den Bildinformationen in dem Zielauslasskanal nach dem Empfangen der Bildinformationen in dem Zielauslasskanal und Beurteilen, ob die Bildinformationen in dem Zielauslasskanal mit den
Transportmischernummerinformationen des Transportmischers gemäß den Verifizierungsinformationen übereinstimmen; wenn beurteilt wird, dass die Bildinformationen in dem Zielauslasskanal mit den Transportmischernummerinformationen des Transportmischers (1) übereinstimmen, Vornehmen des Schritts eines Erzeugens einer Fahrbetriebsaufforderung gemäß den Bildinformationen in dem Zielauslasskanal oder eines Steuerns des Transportmischers, um ein automatisches Fahren gemäß den Bildinformationen in dem Zielauslasskanal auszuführen.

2. Steuerverfahren für einen Transportmischer (1) nach Anspruch 1, wobei der Schritt des Herstellens einer Kommunikationsverbindung mit der Mischstation (2) insbesondere umfasst:
Beurteilen, ob ein fahrzeugmontiertes Kommunikationsmodul (106) des Transportmischers (1) in einem eingeschalteten Zustand ist, und Starten des fahrzeugmontierten Kommunikationsmoduls (106), wenn das fahrzeugmontierte Kommunikationsmodul (106) nicht in einem eingeschalteten Zustand ist; und
Suchen eines zu kommunizierenden Moduls in der Umgebung des Transportmischers (1), wenn das fahrzeugmontierte Kommunikationsmodul (106) in einem eingeschalteten Zustand ist, Abgleichen und Verifizieren davon mit einem gesuchten zu kommunizierenden Modul, nach der Verifizierung, Herstellen einer
Kommunikationsverbindung mit dem zu kommunizierenden Modul, das die Verifizierung bestanden hat.

3. Steuerverfahren für einen Transportmischer (1) nach Anspruch 1, wobei
die Bildinformationen in dem Zielauslasskanal Videoinformationen und/oder Bildinformationen umfassen, die die relative Position der Auslassöffnung (4) und eines Zuführtrichters (3) darstellen.

4. Steuerverfahren für einen Transportmischer (1) nach Anspruch 1, wobei der Schritt des Ausführens einer Fahrbetriebsaufforderung gemäß den Bildinformationen in dem Zielauslasskanal umfasst:
Analysieren und Anzeigen der Bildinformationen in dem Zielauslasskanal; und
Erzeugen und Anzeigen zusätzlicher Identifikationsinformationen und/oder Ausführen einer Sprachnavigationsaufforderung gemäß den Bildinformationen in dem Zielauslasskanal,
wobei die zusätzlichen Identifikationsinformationen eine Position einer zu zentrierenden Auslassöffnung (4), eine Position des Zuführtrichters (3) des Transportmischers (1) und Straßenidentifikationsinformationen umfassen.

5. Steuerverfahren für einen Transportmischer (1) nach Anspruch 1, ferner umfassend:
Erzeugen einer Aufforderung zum Abschließen des Zentrierens und/oder Senden einer Anforderungsauslassanweisung an die Mischstation (2), wenn die Anweisung zum Abschließen des Zentrierens erhalten wird.

6. Steuerverfahren für einen Transportmischer (1) nach Anspruch 5, ferner umfassend:
Erzeugen einer Anweisung zum Stoppen des Auslassens und Senden derselben an die Mischstation (2) gemäß den Eingabeinformationen, die durch den Benutzer eingegeben werden.

7. Steuerverfahren für einen Transportmischer (1) nach Anspruch 1, ferner umfassend:
Empfangen und Anzeigen von Versandinformationen, wobei die Versandinformationen mindestens eines umfassen von konkretem Modell, Gewicht und Destination.

8. Steuerverfahren für eine Mischstation (2), umfassend:
Herstellen einer Kommunikationsverbindung mit einem Transportmischer (1);
Empfangen von Transportmischernummerinformationen des Transportmischers (1), **gekennzeichnet durch** das Bestimmen eines Zielauslasskanals gemäß den Transportmischernummerinformationen;
Senden von Bildinformationen in dem Zielauslasskanal an den Transportmischer (1);
Beurteilen, ob das Zentrieren eines Zuführtrichters (3) des Transportmischers (1) und einer zu zentrierenden Auslassöffnung (4) gemäß den Bildinformationen in dem Zielauslasskanal abgeschlossen wurde;
Analysieren der Verifizierungsinformationen in den Bildinformationen in dem Zielauslasskanal nach dem Empfangen der Bildinformationen in dem Zielauslasskanal und Beurteilen, ob die Bildinformationen in dem Zielauslasskanal mit den Transportmischernummerinformationen des Transportmischers gemäß den Verifizierungsinformationen übereinstimmen; wenn beurteilt wird, dass die Bildinformationen in dem Zielauslasskanal mit den Transportmischernummerinformationen des Transportmischers (1) übereinstimmen, Vornehmen des Schritts des Erzeugens einer Fahrbetriebsaufforderung gemäß den Bildinformationen in dem Zielauslasskanal oder des Steuerns des Transportmischers, um ein automatisches Fahren gemäß den Bildinformationen in dem Zielauslasskanal auszuführen; und
Erzeugen und Senden einer Anweisung zum Abschließen des Zentrierens an den Transportmischer, nachdem der Zuführtrichter (3) des Transportmischers und die zu zentrierende Auslassöffnung (4) abgeschlossen wurden, und Öffnen der Auslassöffnung (4), die zentriert wurde, und Steuern des automatischen Auslassens.

9. Steuerverfahren für eine Mischstation (2) nach Anspruch 8, ferner umfassend:
Steuern der Auslassöffnung (4), die dem Transportmischer (1) entspricht, um das Auslassen zu stoppen, nachdem eine Anweisung zum Stoppen des Auslassens erhalten wird, die durch einen beliebigen der Transportmischer (1) gesendet wird.

10. Transportmischer (1), umfassend:
einen fahrzeugmontierten Anzeigebildschirm (102) zum Anzeigen von Informationen;
ein fahrzeugmontiertes Kommunikationsmodul (106) zum Ausführen der Kommunikation;
eine Mensch-Computer-Interaktionseinheit (108) zum Empfangen von Benutzeranweisungsinformationen, **dadurch gekennzeichnet, dass** sie eine Sprachaufforderungsvorrichtung (104) zum Ausführen einer Sprachaufforderung umfassen; und
eine Transportmischersteuervorrichtung (110), umfassend einen Speicher (1104) und einen Prozessor (1102), wobei ein Computerprogramm in dem Speicher (1104) gespeichert ist und der Prozessor konfiguriert ist, um die Schritte des Steuerverfahrens für einen Transportmischer (1) nach einem der Ansprüche 1 bis 7 zu implementieren, wenn das Computerprogramm vorgenommen wird.

11. Mischstation (2), umfassend:
ein Mischstationskommunikationsmodul (202) zum Kommunizieren mit dem fahrzeugmontierten Kommunikationsmodul (106) eines Transportmischers (1);
**dadurch gekennzeichnet, dass** sie eine Sammelvorrichtung (204) umfasst, die entsprechend einer Auslassöffnung (4) montiert ist und zum Sammeln eines Bilds um die Auslassöffnung (4) herum verwendet wird; und
eine Mischstationssteuervorrichtung (206), umfassend einen Speicher (2062) und einen Prozessor (2064), wobei ein Computerprogramm auf dem Speicher (2062) gespeichert ist und der Prozessor (2064) konfiguriert ist, um die Schritte des Steuerverfahrens für eine Mischstation (2) nach Anspruch 8 oder 9 zu implementieren, wenn das Computerprogramm vorgenommen wird.

12. Zentriersteuersystem (6), **dadurch gekennzeichnet, dass** es umfasst:
ein fahrzeugmontiertes Steuerendgerät (62), umfassend einen fahrzeugmontierten Speicher (622) und einen fahrzeugmontierten Prozessor (624), wobei ein Computerprogramm auf dem fahrzeugmontierten Speicher (622) gespeichert ist und der fahrzeugmontierte Prozessor (624) konfiguriert ist, um die Schritte des Steuerverfahrens für einen Transportmischer (1) nach einem der Ansprüche 1 bis 7 zu implementieren, wenn das Computerprogramm vorgenommen wird; und
ein Mischstationssteuerendgerät (64), umfassend einen Mischstationsspeicher (642) und einen Mischstationsprozessor (644), wobei ein Computerprogramm auf dem Mischstationsspeicher (642) gespeichert ist und der Mischstationsprozessor (644) konfiguriert ist, um die Schritte des Steuerverfahrens für eine Mischstation (2) nach Anspruch 8 oder 9 zu implementieren, wenn das Computerprogramm vorgenommen wird.

## Revendications

1. Procédé de commande d'un camion malaxeur (1), comprenant:
l'établissement d'une connexion de communication avec une station de mélange (2);
l'envoi des informations relatives au numéro du camion malaxeur (1) à la station de mélange (2) après l'établissement de la connexion de communication avec la station de mélange; **caractérisé par**
la réception des informations d'image dans un canal de déchargement cible après avoir établi la connexion de communication avec la station de mélange (2), dans lequel les informations d'image dans le canal de déchargement cible comprennent des informations sur la position d'une ouverture de décharge (4) à centrer;
l'exécution d'une opération de conduite selon les informations d'image dans le canal de déchargement cible, ou la commande du camion malaxeur (1) pour effectuer une conduite automatique selon les informations d'image dans le canal de déchargement cible; et
lorsqu'une instruction d'achèvement du centrage est obtenue, la confirmation du fait que le centrage est terminé, dans lequel,
l'analyse des informations de vérification dans les informations d'image du canal de déchargement cible après réception des informations d'image du canal de déchargement cible, et le jugement du fait que les informations d'image du canal de déchargement cible correspondent aux informations relatives au numéro de camion malaxeur du camion malaxeur selon les informations de vérification; lorsqu'il est jugé que les informations d'image dans le canal de déchargement cible correspondent aux informations de numéro de camion-malaxeur du camion-malaxeur (1), l'exécution de l'étape de génération d'une invite d'opération de conduite selon les informations d'image dans le canal de déchargement cible ou la commande du camion-malaxeur afin qu'il effectue une conduite automatique selon les informations d'image dans le canal de déchargement cible.

2. Procédé de commande d'un camion mélangeur (1) selon la revendication 1, dans lequel l'étape d'établissement d'une connexion de communication avec la station de mélange (2) comprend spécifiquement:
le jugement du fait qu'un module de communication monté sur le véhicule (106) du camion malaxeur (1) est en état de marche, et le démarrage du module de communication monté sur le véhicule (106) lorsque le module de communication monté sur le véhicule (106) n'est pas en état de marche; et
la recherche d'un module autour du camion malaxeur (1) à communiquer lorsque le module de communication monté sur le véhicule (106) est en état de marche, sa mise en correspondance et sa vérification avec un module recherché à communiquer, après vérification,
l'établissement d'une connexion de communication avec le module à communiquer dont la vérification a réussie.

3. Procédé de commande d'un camion-malaxeur (1) selon la revendication 1, dans lequel
les informations d'image dans le canal de déchargement cible comprennent des informations vidéo et/ou des informations d'image représentant la position relative de l'ouverture de décharge (4) et d'une trémie d'alimentation (3).

4. Procédé de commande d'un camion malaxeur (1) selon la revendication 1, dans lequel l'étape d'exécution de l'invite à l'opération de conduite selon les informations d'image dans le canal de déchargement cible comprend:
l'analyse et l'affichage des informations d'image dans le canal de déchargement de la cible; et
la génération et l'affichage des informations d'identification auxiliaires et/ou la réalisation d'une invite de navigation vocale selon les informations d'image dans le canal de déchargement de la cible,
dans lequel les informations d'identification auxiliaires comprennent une position d'ouverture de déchargement (4) à centrer, une position de la trémie d'alimentation (3) du camion malaxeur (1) et des informations d'identification de la route.

5. Procédé de commande d'un camion-malaxeur (1) selon la revendication 1, comprenant en outre:
la génération d'un message d'achèvement de centrage et/ou l'envoi d'une d'instruction de demande du déchargement à la station de mélange (2) lorsque l'instruction d'achèvement de centrage est obtenue.

6. Procédé de commande d'un camion malaxeur (1) selon la revendication 5, comprenant en outre:
la génération d'une instruction d'arrêt du déchargement et son envoi à la station de mélange (2) selon les informations entrées par l'utilisateur.

7. Procédé de commande d'un camion-malaxeur (1) selon la revendication 1, comprenant en outre:
la réception et l'affichage des informations d'expédition, dans lequel les informations d'expédition comprennent au moins l'un parmi: le modèle de béton, le poids et la destination.

8. Procédé de commande d'une station de mélange (2), comprenant:
l'établissement d'une connexion de communication avec un camion-malaxeur (1);
la réception des informations de numéro de camion-malaxeur du camion-malaxeur (1), **caractérisé par** la détermination d'un canal de déchargement cible selon les informations de numéro de camion-malaxeur;
l'envoi d'informations d'image dans le canal de déchargement cible au camion mélangeur (1);
le jugement du fait que le centrage d'une trémie d'alimentation (3) du camion malaxeur (1) et d'une ouverture de déchargement (4) à centrer a été effectué selon les informations d'image dans le canal de déchargement cible;
l'analyse des informations de vérification dans les informations d'image du canal de déchargement cible après réception des informations d'image du canal de déchargement cible, et le jugement du fait que les informations d'image du canal de déchargement cible correspondent aux informations relatives au numéro de camion malaxeur du camion malaxeur selon les informations de vérification; lorsqu'il est jugé que les informations d'image du canal de déchargement cible correspondent aux informations de numéro de camion-malaxeur du camion-malaxeur (1), l'exécution de l'étape de génération d'une invite d'opération de conduite selon les informations d'image du canal de déchargement cible ou la commande du camion-malaxeur afin qu'il effectue une conduite automatique selon les informations d'image du canal de déchargement cible; et
la génération et l'envoi d'une instruction d'achèvement du centrage au camion malaxeur après que la trémie d'alimentation (3) du camion malaxeur et l'ouverture de déchargement (4) à centrer ont été achevées, et l'ouverture de l'ouverture de déchargement (4) qui a été centrée, et la commande du déchargement automatique.

9. Procédé de commande d'une station de mélange (2) selon la revendication 8, comprenant en outre:
la commande de l'ouverture de déchargement (4) correspondant au camion mélangeur (1) pour arrêter le déchargement après l'obtention d'une instruction d'arrêt du déchargement envoyée par l'un des camions mélangeurs (1).

10. Camion malaxeur (1), comprenant:
un écran d'affichage monté sur le véhicule (102) pour afficher des informations;
un module de communication monté sur le véhicule (106) pour assurer la communication;
une unité d'interaction homme-machine (108) pour la réception d'informations sur les instructions de l'utilisateur; **caractérisée par** la présence d'un dispositif de guidage vocal (104) pour l'accomplissement d'une invite vocale; et
un dispositif de commande de camion-malaxeur (110), comprenant une mémoire (1104) et un processeur (1102), dans lequel un programme informatique est stocké dans la mémoire (1104), et le processeur est configuré pour mettre en œuvre les étapes du procédé de commande pour un camion-malaxeur (1) selon l'une quelconque des revendications 1 à 7 au moment où le programme informatique est exécuté.

11. Station de mélange (2), comprenant:
un module de communication de station de mélange (202) pour communiquer avec le module de communication monté sur le véhicule (106) d'un camion-malaxeur (1);
**caractérisé par** la présence d'un dispositif de collecte (204), monté en correspondance avec une ouverture de déchargement (4) et utilisé pour collecter une image autour de l'ouverture de déchargement (4); et
un dispositif de commande de station de mélange (206), comprenant une mémoire (2062) et un processeur (2064), dans lequel un programme informatique est stocké sur la mémoire (2062), et le processeur (2064) est configuré pour mettre en œuvre les étapes du procédé de commande d'une station de mélange (2) selon la revendication 8 ou 9 lorsque le programme informatique est exécuté.

12. Système de commande de centrage (6), **caractérisé en ce qu'**il comprend:
un terminal de commande monté sur le véhicule (62), comprenant une mémoire montée sur le véhicule (622) et un processeur monté sur le véhicule (624), dans lequel un programme informatique est stocké sur la mémoire montée sur le véhicule (622), et le processeur monté sur le véhicule (624) est configuré pour mettre en œuvre les étapes du procédé de commande d'un camion malaxeur (1) selon l'une quelconque des revendications 1 à 7 lorsque le programme informatique est exécuté; et
un terminal de commande de station de mélange (64), comprenant une mémoire de station de mélange (642) et un processeur de station de mélange (644), dans lequel un programme informatique est stocké sur la mémoire de station de mélange (642), et le processeur de station de mélange (644) est configuré pour mettre en œuvre les étapes du procédé de commande d'une station de mélange (2) selon la revendication 8 ou 9 lorsque le programme informatique est exécuté.
